# EUROPEAN PATENT APPLICATION

(11) **EP 4 332 901 A1**
(43) Date of publication of application: **06.03.2024**
(21) Application number: 22193150.4
(22) Date of filing: 31.08.2022
(51) Int. Cl.: G06T 7/73, G06T 19/00, G06V 20/20

(54) **LOCALIZING AN AUGMENTED REALITY DEVICE USING A SINGLE IDENTIFIER**

(71) Applicant: Siemens Aktiengesellschaft, 80333 München (DE)
(72) Inventor: Labisch, Daniel, 76149 Karlsruhe (DE); Lehrbaum, Valeriya, 80804 München (DE); MacWilliams, Asa, 82256 Fürstenfeldbruck (DE); Scherer, Tim, 76185 Karlsruhe (DE); Sudharsan, Nischita, 82131 Gauting (DE)
(74) Representative: Siemens Patent Attorneys

(57) **Abstract**

The disclosure relates to a method for localizing an augmented reality device within a virtual map of a real-world environment by matching a single real-world identifier data to a virtual-world identifier data and using the identifier position and the coordinate system orientation of the real-world identifier, in combination with a previously stored identifier orientation of the virtual-world identifier.

A corresponding augmented reality device for performing such a method and a computer program product is disclosed as well.

## Description

### Field of the Invention

The embodiments disclosed herein relate to a method for localizing an augmented reality device within a virtual map of a real-world environment. A corresponding augmented reality device for performing such a method and a computer program product is disclosed as well.

### Background of the Invention

In augmented reality (AR) applications and in given environments, there exist use cases where users want to create 3D holograms within the AR view, to "annotate" or provide appending information to a real-world object existing in the environment. One such example is when a machine or equipment exists, which may be needed to be repaired or assembled and for that one could use AR technologies to add 3D holograms such as PDFs, data and parameters from systems or remote servers or some other forms of annotations. These could then assist technicians or personnel to perform the relevant tasks for that machine.

However, when these holograms are first created, they are done so in specific places or points which are relevant to the area in which they belong. For instance, the manuals containing the assembly information may be directly appended onto the part which needs to be assembled, or a photo of the faulty part may be attached to the part of a motor which is damaged and so on. When one such user creates these holograms in AR, the AR device and the AR application within needs to remember the position and orientation of the hologram in relation to the real-world environment.

The process of re-localization and re-orientation of a current user position and a current user orientation to match the exact position/location and orientation within a virtual environment or virtual map is referred to as "alignment" in the following. The virtual environment or virtual map comprises existing 3D holograms with positions and orientation corresponding to their initial creation.

There has been a previous way already described to show the alignment to be done automatically by scanning at least a minimum of three unique identifiers and then re-localizing the previously created 3D holograms to match its initial creation position and orientation. The identifiers, also called anchors, could be a unique marker or QR code, a text label, photo, or an object. The method can be time consuming and elaborate if there are much smaller areas or less equipment to align the holograms onto. Therefore, a faster way to align the previously created holograms onto the module and to localize an AR device, without the elaborate process of scanning three identifiers to align the holograms, is needed.

The automation of the alignment process is done by scanning three unique identifiers within an environment. There are a minimum of three unique identifiers associated with each environment. The user goes around with their AR device and scans or takes pictures of at least three different objects which serve as unique labels or anchors to the environment in context. Alternative it is possible to use the vertical axis and two unique identifiers.

If it is possible to clearly detect the label's orientation, like for a QR code, even one label is sufficient for alignment. In QR code alignment, however, also the three squares in the corners of the QR code are needed, thus it corresponds to the three-anchor alignment. But in general, the orientation is not very accurate and could easily be disturbed. Even small deviations in the alignment process lead to large errors in some distance. Hence, this procedure should not be used in wide-area applications.

As an alternative way without using labels, codes, or objects, the alignment can be performed by marking or touching the edges of the machine or module to be equipped with holograms. But also, in that approach multiple edges need to be identified. In addition, it must be clear for the user which points are the relevant ones (e.g., which edges and even in which order). Moreover, the position and orientation of those edges need to be engineered beforehand. Further, the AR device must be aware of which edge has been touched to match the touch/click with the correct virtual position/orientation in the process of alignment.

An alternative is to align via SLAM map (Simultaneous Localization and Mapping). The device recognizes the environment, at least partly, to know its position and orientation therein. This procedure only works if everything still looks like the time the original map was created. This includes even having the same objects around such as furniture, equipment etc. and no changes in orientation or placement of these objects should have been made. Reconstructions but also different light situations (cloudy, bright, or even night) prevent the device from realigning. Therefore, this solution is not appropriate for industrial applications.

Alignment is also possible without any scanning or automatic mapping by performing a manual matching procedure of points in the real- and virtual-world. Thereby a 3D model of a real object is displayed, which needs to be moved and rotated to its real position. Afterwards, this is used to align the user to the real object and, therefore, to the real world.

Similar use cases exist also in a complete virtual reality (VR) environment where one would also need to align virtual objects with respect to each other. One such example would be where a user is learning to train with a virtual model of an equipment and needs some additional data to be shown around the equipment at runtime. In this VR environment, the user then would need to come up with a way to align info relative to the virtual model.

In summary, the necessity of an up-to-date 3D model is not given in every application. Issues with current methods are that the procedures are time consuming. Lastly, current alignment methods are inaccurate in case of small objects and cumbersome in case of large objects.

Accordingly, there is a need for an improved method for localizing an AR device within a virtual map.

### Summary

Embodiments herein generally relate to a method for localizing an augmented reality device in a real-world environment within a virtual map of the real-world environment. The augmented reality device is positioned in the real-world environment. The localizing takes place within a virtual map of the real-world environment.

The method including the steps of:
- Capturing a real-world identifier data of a real-world identifier in the real-world environment using the augmented reality device,
   the real-world identifier data includes:
   o a real-world identifier position within a real-world coordinate system,
      the real-world coordinate system being positioned in the real-world environment,
      the real-world coordinate system being oriented in a real-world coordinate system orientation within the real-world environment,
- Matching the real-world identifier data to a virtual-world identifier data of a virtual-world identifier using corresponding matching data of both, the real-world identifier data and the virtual-world identifier data, identifier data,
   the virtual-world identifier data includes:
      o a virtual-world identifier position within a virtual-map coordinate system,
      o a virtual-world identifier orientation within the virtual-map coordinate system,
   the virtual-world identifier orientation defining rotation values of the virtual-world identifier within the virtual-map coordinate system,
   the virtual-map coordinate system being positioned in the virtual map,
   the virtual map comprising the virtual-map coordinate system
   the virtual-map coordinate system being oriented in a virtual-map coordinate system orientation within the virtual map,
- Assigning the virtual-world identifier orientation as a real-world identifier orientation to the real-world identifier data,
   the real-world identifier orientation defining rotation values of the real-world identifier within the real-world coordinate system, especially a rotation of the real-world identifier within the real-world coordinate system assuming that it was arbitrary before,
- Localizing the augmented reality device within the virtual map by moving the virtual map and its virtual-map coordinate system by:
   o Shifting the virtual-world identifier position within the virtual map coordinate system onto the real-world identifier position within the real-world coordinate system, especially a shifting of the virtual-map coordinate system and its virtual map using a position matching of both identifiers and a re-positioning of the virtual-map coordinate system,
   o Rotating the virtual-map coordinate system into the real-world coordinate system orientation relative to the real-world environment by aligning the virtual-world identifier orientation onto the real-world identifier orientation within, and especially relative to, the real-world coordinate system, especially a rotating of the virtual-map coordinate system and its virtual map.

To sum up the idea of the invention, it is assumed that for the capturing a real-world identifier data of a real-world identifier the augmented reality device has (more or less) the same orientation as the virtual-world identifier data of the virtual-world identifier while scanning object anchor. Therefore, the identifier orientation stored for the virtual-world identifier and assigned to the real-world identifier is used in the alignment of the coordinate systems and the identifiers.

By saving the orientation of the AR device and the orientation of the identifier within the coordinate system when the virtual-world identifier data was defined, it is assumed, that the orientation is the same during capturing the real-world identifier data of the real-world identifier again. Thereby, also the orientation of the real-world coordinate system is fixed. As the orientation and location of the AR device relative to the real-world identifier is known, the localization, especially the orientation and location, of the AR device within the virtual map is known after performing the method according to the invention.

Thereby, a very fast alignment process is provided which is especially appropriate for smaller places, e.g., a dosing module, 60x40x25 cm. The accuracy can be improved by telling the user of the AR device to remember his orientation relative to the real-world identifier while capturing the real-world identifier data of the real-world identifier and always use the same or always use an orthogonal orientation with respect to the real-world identifier.

As a small orientational error leads to large displacements the more the user moves away from the label, the accuracy of the orientation is crucial for this method.

Therefore, this invention proposes one such solution of performing the alignment of the identifiers and the localization of the AR device in a fast and efficient way. Different to previous methods, which only use labels and their position for alignment, within the proposed invention only a single label and in addition its orientation is used for localization.

The virtual-world identifier is an identifier corresponding to the real-world identifier. The virtual-world identifier data of the virtual-world identifier was captured and stored before. It was especially captured from the same object in the real-world environment, the real-world identifier data of a real-world identifier is captured within the claimed method. In this case the real-world identifier and the virtual-world identifier are the same. In a further embodiment, the virtual-world identifier is a previous defined virtual object in the virtual map.

In a further embodiment both, the real-world coordinate system and the virtual-map coordinate system being three-dimensional coordinate systems comprising three orthogonal axes, the orthogonal axes including:
- a lateral axis (x),
- a longitudinal axis, also called a depth axis (y), and
- a vertical axis (z).

The lateral axis defines the pitch, the longitudinal axis the roll, and the vertical axis the yaw of the movement of an object within the three-dimensional coordinate systems.

In a further embodiment the identifier orientation and the virtual-world identifier orientation defining a rotation value of the virtual-world identifier around:
- The lateral axis (x), e.g., an inclination, within the depth plane (y-z-plane), and/or
- the depth axis (y), e.g., a tilt, within lateral plane (x-z-plane) and/or
- the vertical axis (z), e.g., a rotation value of the real-world identifier within horizontal plane (x-y plane),
of the real-world coordinate system.

Alternative to the identifier orientation defining the rotation value of the virtual-world identifier around the lateral axis (x), e.g., an inclination, within the depth plane (y-z-plane), sensors, especially a magnetic compass, an accelerator (sense gravity), and gyroscope, contained in most mobile devices can be used to determine the orientation of the device if it is not assumed to be the same during creating and scanning the anchor.

In general, the direction of gravity, the rotation value of the virtual-world identifier around the lateral axis (x), can be estimated very accurately with common AR devices. Thereby, the up vector is exactly known during the generation of the anchor as well as during alignment. Therefore, the inclination of the device during scanning could be ignored just using the up vector, e.g., the lateral axis (x). Only the orientation in the horizontal plane (x-y) is relevant. In most cases it is very easy to have the device orthogonal to the label in horizontal plane and the users would already achieve that intuitively.

In this alternative, relaxing the inclination makes it very comfortable using different devices like tablets and glasses. Scanning the label with inclination is much more comfortable for the user.

In defining a rotation value of the virtual-world identifier around the depth axis (y), e.g., a tilt, within lateral plane (x-z-plane) of the virtual-map coordinate system, it is assumed that the user is holding the AR device while capturing the real-world identifier with the same inclination as when creating the virtual-world identifier data (anchor).

The same applies to defining a rotation value of the virtual-world identifier around the vertical axis (z), e.g., a rotation value of the real-world identifier within horizontal plane (x-y plane), it is assumed that the user is holding the AR device while capturing the real-world identifier with the same orientation relative to the vertical axis (z) as when creating the virtual-world identifier data (anchor).

In a further embodiment the rotation value being arranged as:
- a rotation angle, in degree, and/or
- a radian measure and/or
- a quaternion.

The coordinate system orientation within the virtual map of the virtual-map coordinate system defines the three rotational degrees of freedom within the virtual map.

In a further embodiment the capturing of the real-world identifier data of the real-world identifier in the real-world environment using the augmented reality device is performed using:
- an optical sensor and/or
- an optical recognition device, especially a camera and/or
- Ultra-Wideband (UWB) technology and/or
- an NFC tag recognition device.

Therefore, according to this embodiment, the real-world identifier data is especially a photo of real-world identifier.

In a further embodiment the augmented reality device being a smartphone, a tablet, glasses or the like. They are designed for providing additional virtual information to "classical" optical information.

In a further embodiment the augmented reality device comprises an "optical recognition device", especially a video camera, a photo sensor or the like. It is designed for gathering optical information and making this information available for the augmented reality device as described before. Alternatively, an NFC tag can be used as an identifier.

In a further embodiment within capturing of the real-world identifier data a determining of the real-world identifier position within the real-world coordinate system is performed using:
- Simultaneous Localization and Mapping (SLAM) and/or
- visual-inertial odometry and/or
- plane detection and/or
- NFC tag localization and/or
- Artificial Intelligence Object Recognition.

The augmented reality device has a camera and additional inertial/magnetic sensors. Magnetometers, accelerator, gyroscope, or radio-frequency location techniques can be used to estimate a position and/or orientation and/or movement of the augmented reality device roughly.

The real-world identifier of the real-world identifier determines a fixed position of the real-world coordinate system. It could be easily detected by using a mesh of the environment automatically estimated within e.g. AR Kit or Mixed Reality Toolkit.

Using Simultaneous Localization and Mapping (SLAM) and/or visual-inertial odometry the AR device recognizes the environment, at least partly, to know its position and orientation therein.

With the help of SLAM the problem of constructing a map of an unknown environment (around the augmented reality device) while simultaneously keeping track of a location of the augmented reality device within it is solved efficiently. Compared to wide-scale visual-inertial odometry, this method/system does not require the entire real-world environment, especially a technical plant, to be mapped out or scanned first. Again, this involves a high effort and, in addition, the visual odometry of the real-world environment, especially a technical plant, is challenging as cylindric pipes create varying reflections depending on the light situation.

Within a further improvement, plane detection can be used to detect the plane of the label. This enables great results if the label is large enough or printed on a larger plane, e.g. on a wall. Plane detection again is a standard feature of common AR libraries.

In a further embodiment the real-world identifier and/or the virtual-world identifier is:
- a unique marker and/or
- a code and/or
- a QR code and/or
- a bar code and/or
- a unique label and/or
- an identifier and/or
- a text label and/or
- a photo and/or
- a picture and/or
- an object and/or
- an edge of an object and/or
- an NFC tag.

The real-world identifier and/or the virtual-world identifier can also be called "anchors".

The use of a QR code gives an accurate position and rotation, which accuracy primary depends on the library.

The real-world identifier is associated to a device of the real-world environment, especially a technical plant, i.e. it is a characteristic of this component/device, providing a clear identification feature. A mapping of the real-world identifier and the name of the component in the virtual map is available using the corresponding virtual-world identifier. The virtual map can just consist of a list of identifier labels together with their position and orientation in the virtual-map coordinate system.

In a further embodiment the virtual-world identifier is:
- equal to the real-world identifier and/or
- a previous state, e.g., a previous version, of the real-world identifier and/or
- a virtualisation of the real-world identifier.

In a further embodiment the virtual map and/or results of the localizing of the augmented reality device within the virtual map are stored on:
- the augmented reality device and/or
- an external server.

In a further embodiment the virtual map is a three-dimensional model of the real-world environment, especially a technical plant.

A "technical plant" can be a plant in process industries like a chemical or a pharmaceutical plant. This also includes any plant from the production industry, plants in which e.g. cars or goods of all kinds are produced. Technical plants that are suitable for carrying out the method according to the invention can also come from the field of energy generation. Wind turbines, solar plants or power plants for power generation are also covered by the term of technical plant. Moreover, a technical plant can also be the facility of a building.

In a further embodiment the virtual map comprises a plurality of virtual map parts, wherein the virtual map parts are arranged as subspaces of the three-dimensional model of the real-world environment, especially a technical plant.

In a further embodiment the method comprises the further steps of:
- Showing an augmentation, especially an annotation and/or a hologram, corresponding to the virtual-world identifier using the augmented reality device after the localizing of the augmented reality device within the virtual map.

According to this embodiment, the invention aims to describe an easier way for performing the alignment of holograms when there are smaller areas, e.g., a dosing module, 60x40x20 cm, or individual machines to align the holograms onto.

Embodiments herein further relate to an augmented reality device, comprising:
- A capturing unit, arranged for capturing a real-world identifier data of a real-world identifier in the real-world environment,
   the real-world identifier data includes:
   o a real-world identifier position within a real-world coordinate system,
      the real-world coordinate system being positioned in
      the real-world environment,
      the real-world coordinate system being oriented in a real-world coordinate system orientation within the real-world environment,
- A matching unit, arranged for matching the real-world identifier data to a virtual-world identifier data of a virtual-world identifier using a matching data of both identifier data,
   the virtual-world identifier data includes:
   o a virtual-world identifier position within a virtual-map coordinate system,
   o a virtual-world identifier orientation within the virtual-map coordinate system,
      the virtual-world identifier orientation defining rotation values of the virtual-world identifier within the virtual-map coordinate system,
      the virtual-map coordinate system being positioned in the virtual map, the virtual map comprising the virtual-map coordinate system
      the virtual-map coordinate system being oriented in a virtual-map coordinate system orientation within the virtual map,
- An assigning unit, arranged for assigning the virtual-world identifier orientation as a real-world identifier orientation to the real-world identifier data,
   the real-world identifier orientation defining rotation values of the real-world identifier within the real-world coordinate system, especially a rotaton of the real-world identifier within the real-world coordinate system assuming that it was arbitrary before,
- A localization unit, arranged for localizing the augmented reality device within the virtual map by moving the virtual map and its virtual-map coordinate system by:
   o Shifting the virtual-world identifier position within the virtual map coordinate system onto the real-world identifier position within the real-world coordinate system, especially a shifting of the virtual-map coordinate system and its virtual map using a position matching of both identifiers and a re-positioning of the virtual-map coordinate system,
   o Rotating the virtual-map coordinate system into the real-world coordinate system orientation relative to the real-world environment by aligning the virtual-world identifier orientation onto the real-world identifier orientation within, and especially relative to, the real-world coordinate system, especially a rotating of the virtual-map coordinate system and its virtual map.

In a further embodiment the augmented reality device is arranged for being localized within a virtual map of real-world environment using the method according to the invention.

Embodiments herein further relate to a computer program product comprising instructions which, when the program is executed by the computational device, cause the computational device to carry out the steps of the method according to the invention.

As already stated, the method according to the invention is designed for enabling very fast alignment and localization of an AR device, especially in smaller places, e.g., a dosing module, 60x40x20 cm. For larger places it is proposed to use additional identifiers in some distance of the first one. In larger places small difference in the orientation between the initialization and the re-alignment scale up to larger errors. The given method can be enlarged to multiple anchors by not only using the anchors' positions but also all device orientations during scanning. The whole information could be averaged to create a more robust alignment for larger places. And it naturally extends the one anchor alignment: The user starts with one identifier alignment. While walking through the environment, and as soon as he recognizes inaccuracies an additional identifier is scanned for realignment. By only using one identifier alignment using the virtual-world identifier again, the accuracy close to the virtual-world identifier, if only this one was used, were high, but the accuracy around the first one already might get low. Hence, both identifiers, the first and the virtual-world identifier, should be used and averaged. Thereby, the accuracy around first and virtual-world identifier should be high as well as in between. As the orientational error is very small now, the accuracy is very high even in a larger environment now. And if it decreases while walking further, the procedure could be repeated by scanning further identifier.

Methods using e.g., one QR code for alignment already exist. But these need to detect the orientation of the QR code which cannot be transferred to every type of code or label. In the presented method this is not required which makes it even possible, that the identifier is put on a curved surface like a pipe. In addition, the proposed method makes no assumptions on the size of the identifier if it is readable.

In summary, together with the presented improvements, the inventive method provides a very fast, easy, and intuitive to use, and a very accurate method for alignment.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: shows a flow diagram of a method according to the invention,
- Fig. 2: shows a three-dimensional coordinate system,
- Fig. 3: shows an embodiment the virtual-world identifier data used among others in method steps S2 and S3,
- Fig. 4: shows an embodiment of method steps S1,
- Fig. 5: shows an embodiment of method step S4a,
- Fig. 6: shows an embodiment of method steps S4b, and
- Fig. 7: shows positioning of a user while performing method step S1.

### Detailed Description of the Drawings

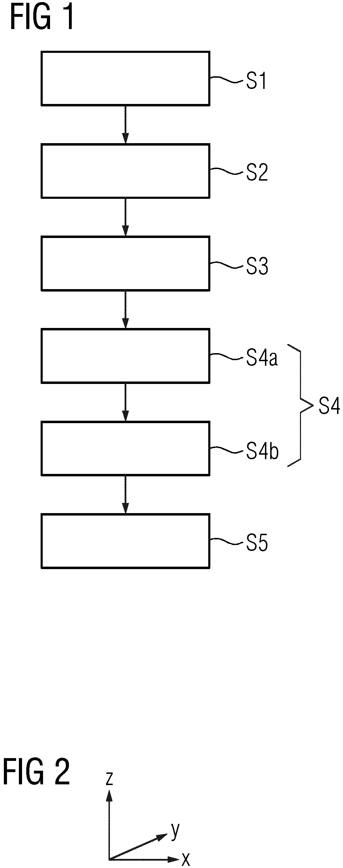

Fig. 1 shows a flow diagram of a method for localizing an augmented reality device within a virtual map of a real-world environment, comprising the steps:
- Step S1: Capturing a real-world identifier data of a real-world identifier in the real-world environment using the augmented reality device,
   the real-world identifier data includes:
   o a real-world identifier position within a real-world coordinate system,
      the real-world coordinate system being positioned in the real-world environment,
      the real-world coordinate system being oriented in a real-world coordinate system orientation within the real-world environment,
- Step S2: Matching the real-world identifier data to a virtual-world identifier data of a virtual-world identifier using corresponding matching data of both, the real-world identifier data and the virtual-world identifier data, identifier data,
   the virtual-world identifier data includes:
      o a virtual-world identifier position within a virtual-map coordinate system,
      o a virtual-world identifier orientation within the virtual-map coordinate system,
   the virtual-world identifier orientation defining rotation values of the virtual-world identifier within
   the virtual-map coordinate system,
   the virtual-map coordinate system being positioned in
   the virtual map,
   the virtual map comprising the virtual-map coordinate system
   the virtual-map coordinate system being oriented in a virtual-map coordinate system orientation within the virtual map,
- Step S3: Assigning the virtual-world identifier orientation as a real-world identifier orientation to the real-world identifier data,
   the real-world identifier orientation defining rotation values of the real-world identifier within the real-world coordinate system, especially a rotation of the real-world identifier within the real-world coordinate system assuming that it was arbitrary before,
- Step S4: Localizing the augmented reality device within the virtual map by moving the virtual map and its virtual-map coordinate system by:
   - Step S4a: Shifting the virtual-world identifier position within the virtual-map coordinate system onto the real-world identifier position within the real-world coordinate system, especially a shifting of the virtual-map coordinate system and its virtual map using a position matching of both identifiers and a re-positioning of the virtual-map coordinate system,
   - Step S4b: Rotating the virtual-map coordinate system into the real-world coordinate system orientation relative to the real-world environment by aligning the virtual-world identifier orientation onto the real-world identifier orientation within, and especially relative to, the real-world coordinate system, especially a rotating of the virtual-map coordinate system and its virtual map.
- Step S5: Showing an augmentation corresponding to the virtual-world identifier using the augmented reality device after the localizing of the augmented reality device within the virtual map.

Fig. 2 shows a three-dimensional coordinate system. The real-world coordinate system and the virtual-map coordinate system being three-dimensional coordinate systems comprising three orthogonal axes, the orthogonal axes including:
- a lateral axis x,
- a depth axis y, and
- the said vertical axis z.

In a further embodiment the identifier orientation defining a rotation value of the virtual-world identifier around:
- The lateral axis x, e.g., an inclination, within the depth plane (y-z-plane), and/or
- the depth axis y, e.g., a tilt, within lateral plane (x-z-plane)
of the virtual-map coordinate system.

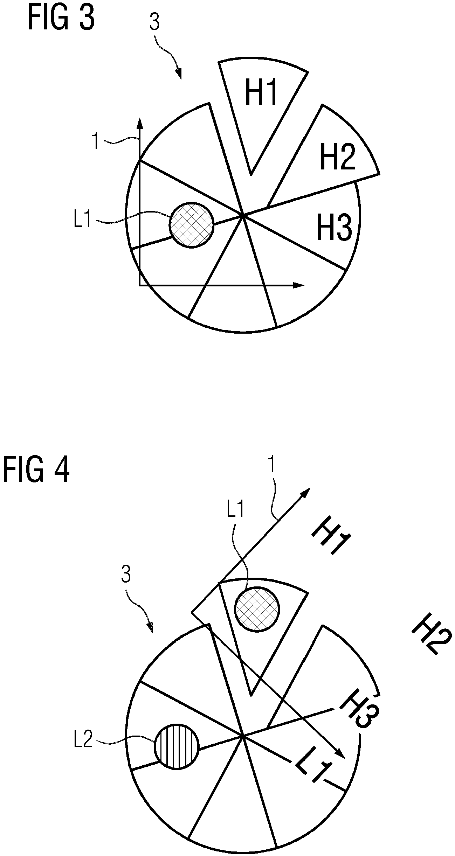

Fig. 3 to Fig. 6 show the steps of the method shown in Fig. 1 in an advantageous embodiment.

Fig. 3 shows the virtual map's virtual-map coordinate system 1 with one label, a squared or chequered dot, the virtual-world identifier L1, and three Holograms H1, H2, H3 on real world object 3: Pizza 3. For simplification just the horizontal plane is shown in 2D.

The data shown in Fig. 3 was created and stored initially. During place creation the user scans at least one label, preferably multiple labels. The content of the label, their position, and the device's orientation during scanning are stored. Coordinate system is assumed to be at (0,0,0) position and (0,0,0) rotation and is located in the real world in the place, where user started the app. The user creates AR content (holograms) and places them at desired positions.

The data shown in Fig. 3 corresponds to the data used in the method steps:
- Step S2: Matching the real-world identifier data to a virtual-world identifier data of a virtual-world identifier L1 using corresponding matching data of both, the real-world identifier data and the virtual-world identifier data 1, identifier data,
   the virtual-world identifier data includes:
      o a virtual-world identifier position within a virtual-map coordinate system 1,
      o a virtual-world identifier orientation within the virtual-map coordinate system 1,
   the virtual-world identifier orientation defining rotation values of the virtual-world identifier L1 within the virtual-map coordinate system 1,
   the virtual-map coordinate system 1 being positioned in the virtual map,
   the virtual map comprising the virtual-map coordinate system 1,
   the virtual-map coordinate system 1 being oriented in a virtual-map coordinate system orientation within the virtual map.
- Step S3: Assigning the virtual-world identifier orientation as a real-world identifier orientation to the real-world identifier data,
   the real-world identifier orientation defining rotation values of the real-world identifier L2 within the real-world coordinate system 2, especially a rotation of the real-world identifier within the real-world coordinate system assuming that it was arbitrary before.

Fig. 4 shows that after restarting the app the user is not aligned. The label L2, the real-world identifier L2, shown as a stripped dot, has not been matched to the virtual-world identifier L1 yet and the Holograms H1, H2, H3 are at wrong positions.

The new coordinate system (2 not shown in Fig. 4) is located at his current position and rotation, which will be different compared to the location where he created the place. The user scans at least one label L2 and tries to hold the device in the same orientation as during place creation (done in Fig. 3) .

This corresponds to the situation after the method step:
- Step S1: Capturing a real-world identifier data of a real-world identifier 12 in the real-world environment using the augmented reality device,
   the real-world identifier data includes:
   o a real-world identifier position within a real-world coordinate system 2,
      the real-world coordinate system 2 being positioned in the real-world environment,
      the real-world coordinate system 2 being oriented in a real-world coordinate system orientation within the real-world environment,

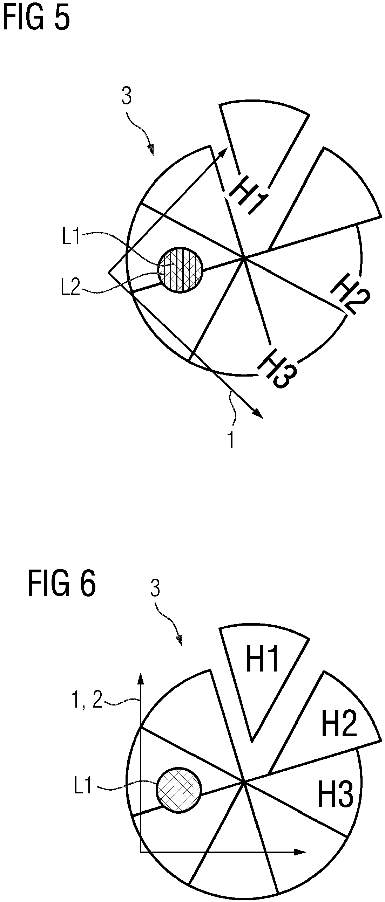

Fig. 5 shows the situation while:
- Step S4: Localizing the augmented reality device within the virtual map by moving the virtual map and its virtual-map coordinate system 1 by:
   - Step S4a: Shifting the virtual-world identifier position of L1 within the virtual-map coordinate system 1 onto the real-world identifier position of L2 within the real-world coordinate system 2, especially a shifting of the virtual-map coordinate system and its virtual map using a position matching of both identifiers and a re-positioning of the virtual-map coordinate system,

Fig. 5 shows that after capturing or scanning the label L2 the position is known. This position is also the correct position for label L1. Therefore, the virtual-map coordinate system 1 is move such that the labels L1 and L2 are on the same position. But as long as the orientation is not known, still the Holograms H1, H2, H3 are at wrong positions.

Fig. 6 shows the situation while:
- Step S4: Localizing the augmented reality device within the virtual map by moving the virtual map and its virtual-map coordinate system 1 by:
   o Step S4b: Rotating the virtual-map coordinate system 2 into the real-world coordinate system orientation relative to the real-world environment by aligning the virtual-world identifier orientation of L1 onto the real-world identifier orientation of L2 within, and especially relative to, the real-world coordinate system 2, especially a rotating of the virtual-map coordinate system 1 and its virtual map.

Now assuming the same orientation within the real-world coordinate system 2 as in the virtual-world coordinate system 1 during place creation in Fig. 3, the alignment is completed, and the holograms H1, H2, H3 are at correct positions.

Using label's L2 current real-world position and real-world coordinate system orientation 2, combined with label's L1 previous world orientation within the virtual-map coordinate system 1, correction to the current coordinate system 1 gets calculated and applied. Coordinate system 1 is getting moved to an original point in the world, which will not be at (0,0,0) position and (0,0,0) rotation anymore, but will be adapted to a new session origin. Therefore, user is aligned. Afterwards, the holograms H1, H2, H3 are shown at the desired positions.

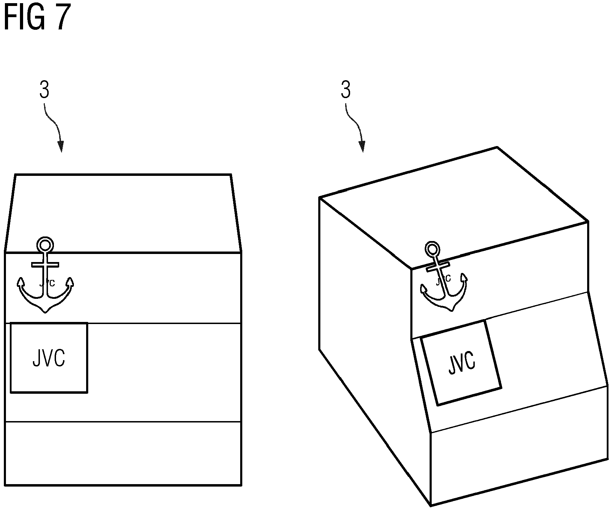

Fig. 7 shows positioning of a user while performing method step S1. Fig. 7 shows on the left how the label JVC of the object 3 is scanned. The small photo "JVC", the anchor and the recognized label JVC are displayed in the same orientation as the AR device was during scanning.

Viewing the object 3 from a different perspective in Fig. 7 on the right, it becomes obvious, that the AR device was orthogonal only in the horizontal plane. Scanning the label JVC with inclination is much more comfortable for the user.

In an advantageous embodiment, the method includes:
- During place creation the user scans at least one label, preferably multiple labels
- The content of the label, their position, and the AR device's orientation during scanning are stored. Coordinate system is assumed to be at (0,0,0) position and (0,0,0) rotation and is located in the real world in the place, where user started the app.
- The user creates AR content (holograms) and places them at desired positions
- After restarting the app, the user is not aligned anymore and the holograms are shown in wrong positions, as new coordinate system is located at his current position and rotation, which will be different compared to the location where he created the place.
- The user scans at least one label and tries to hold the device in the same orientation as during place creation.
- Using label's current world position and orientation, label's old world position and orientation, correction to the current coordinate system gets calculated and applied. Coordinate system is getting moved to an original point in the world, which will not be at (0,0,0) position and (0,0,0) rotation anymore, but will be adapted to a new session origin. Therefore, user is aligned
- Afterwards, the holograms are shown at the desired positions.

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for localizing an augmented reality device in a real-world environment within a virtual map of the real-world environment,
comprising the steps:
- Capturing (S1) a real-world identifier data of a real-world identifier (L2) in the real-world environment using the augmented reality device,
the real-world identifier data includes:
o a real-world identifier position within a real-world coordinate system (2),
the real-world coordinate system (2) being positioned in the real-world environment,
the real-world coordinate system (2) being oriented in a real-world coordinate system orientation within the real-world environment,
- Matching (S2) the real-world identifier data to a virtual-world identifier data of a virtual-world identifier (L1),
the virtual-world identifier data includes:
o a virtual-world identifier position within a virtual-map coordinate system (1),
o a virtual-world identifier orientation within the virtual-map coordinate system (1),
the virtual-world identifier orientation defining rotation values of the virtual-world identifier within the virtual-map coordinate system (1),
the virtual-map coordinate system (1) being positioned in the virtual map,
the virtual-map coordinate system (1) being oriented in a virtual-map coordinate system orientation within the virtual map,
- Assigning (S3) the virtual-world identifier orientation as a real-world identifier orientation to the real-world identifier data,
the real-world identifier orientation defining rotation values of the real-world identifier within the real-world coordinate system (2),
- Localizing (S4) the augmented reality device within the virtual map by moving the virtual map and its virtual-map coordinate system (1) by:
∘ Shifting (S4a) the virtual-world identifier position within the real-world coordinate system (2) onto the real-world identifier position,
∘ Rotating (S4b) the virtual-map coordinate system (1) into the real-world coordinate system orientation relative to the real-world environment by aligning the virtual-world identifier orientation onto the real-world identifier orientation within the real-world coordinate system.

2. Method according to claim 1,
wherein both, the real-world coordinate system (2) and the virtual-map coordinate system (1) being three-dimensional coordinate systems comprising three orthogonal axes, the orthogonal axes including:
- a lateral axis (x),
- a longitudinal axis (y), and
- a vertical axis (z).

3. Method according to claim 2,
wherein the real-world identifier orientation and the virtual-world identifier orientation defining a rotation value of the virtual-world identifier around:
- The lateral axis (x), and/or
- the depth axis (y), and/or
- the vertical axis (z)
of the real-world coordinate system.

4. Method according to claim 3,
wherein the rotation value being arranged as:
- a rotation angle and/or
- a radian measure and/or
- a quaternion.

5. Method according to one of the previous claims,
wherein the capturing of the real-world identifier data of the real-world identifier in the real-world environment using the augmented reality device is performed using:
- an optical sensor and/or
- an optical recognition device, especially a camera and/or
- an NFC tag recognition device and/or
- Ultra-Wideband technology.

6. Method according to one of the previous claims,
wherein within capturing of the real-world identifier data a determining of the real-world identifier position within the real-world coordinate system (2) is performed using:
- Simultaneous Localization and Mapping and/or
- visual-inertial odometry and/or
- plane detection and/or
- Artificial Intelligence Object Recognition and/or
- NFC tag localization.

7. Method according to one of the previous claims,
wherein the real-world identifier and/or the virtual-world identifier is:
- a unique marker and/or
- a code and/or
- a QR code and/or
- a bar code and/or
- a unique label and/or
- an identifier and/or
- a text label and/or
- a photo and/or
- a picture and/or
- an object and/or
- an edge of an object and/or
- an NFC tag.

8. Method according to one of the previous claims,
wherein the virtual-world identifier is:
- equal to the real-world identifier and/or
- a previous state of the real-world identifier and/or
- a virtualisation of the real-world identifier.

9. Method according to one of the previous claims,
wherein the virtual map and/or results of the localizing of the augmented reality device within the virtual map are stored on:
- the augmented reality device and/or
- an external server.

10. Method according to one of the previous claims,
wherein the virtual map is a three-dimensional model of the real-world environment, especially a technical plant.

11. Method according to claim 10,
wherein the virtual map comprises a plurality of virtual map parts,
wherein the virtual map parts are arranged as subspaces of the three-dimensional model of the real-world environment, especially a technical plant.

12. Method according to one of the previous claims,
with the further steps of:
- Showing (S5) an augmentation corresponding to the virtual-world identifier using the augmented reality device after the localizing of the augmented reality device within the virtual map.

13. An augmented reality device, comprising:
- A capturing unit, arranged for capturing a real-world identifier data of a real-world identifier (L2) in the real-world environment,
the real-world identifier data includes:
o a real-world identifier position within a real-world coordinate system (2),
the real-world coordinate system being positioned in the real-world environment (2),
the real-world coordinate system (2) being oriented in a real-world coordinate system orientation within the real-world environment,
- A matching unit, arranged for matching the real-world identifier data to a virtual-world identifier data of a virtual-world identifier (L1),
the virtual-world identifier data includes:
∘ a virtual-world identifier position within a virtual-map coordinate system (1),
∘ a virtual-world identifier orientation within the virtual-map coordinate system (1),
the virtual-world identifier orientation defining rotation values of the virtual-world identifier within the virtual-map coordinate system (1),
the virtual-map coordinate system (1) being positioned in the virtual map,
the virtual-map coordinate system (1) being oriented in a virtual-map coordinate system orientation within the virtual map,
- An assigning unit, arranged for assigning the virtual-world identifier orientation as a real-world identifier orientation to the real-world identifier data,
the real-world identifier orientation defining rotation values of the real-world identifier within the real-world coordinate system (2),
- A localization unit, arranged for localizing the augmented reality device within the virtual map by moving the virtual map and its virtual-map coordinate system (1) by:
o Shifting the virtual-world identifier position within the virtual-map coordinate system (1) onto the real-world identifier position,
o Rotating the virtual-map coordinate system (1) into the real-world coordinate system orientation relative to the real-world environment by aligning the virtual-world identifier orientation onto the real-world identifier orientation within the real-world coordinate system (2), especially a rotating of the virtual-map coordinate system (1) and its virtual map.

14. Augmented reality device according to claim 13, arranged for being localized within a virtual map of real-world environment using a method according to one of the claims 1 to 12.

15. A computer program product comprising instructions which, when the program is executed by the computational device, cause the computational device to carry out the steps of the method according to one of the claims 1 to 13.
